# EUROPEAN PATENT APPLICATION

(11) **EP 4 723 699 A1**
(43) Date of publication of application: **08.04.2026**
(21) Application number: 24829759.0
(22) Date of filing: 22.01.2024
(51) Int. Cl.: H04W 8/08

(54) **ROAMING COMMUNICATION METHOD, COMMUNICATION NETWORK DEVICE, SYSTEM, AND STORAGE MEDIUM**

(30) Priority: 30.06.2023 CN 202310802645
(71) Applicant: ZTE CORPORATION, Shenzhen, Guangdong 518057 (CN)
(72) Inventor: FANG, Yanwei, Shenzhen, Guangdong 518057 (CN); HUANG, Shulin, Shenzhen, Guangdong 518057 (CN); ZHOU, Junchao, Shenzhen, Guangdong 518057 (CN); NIU, Jiaohong, Shenzhen, Guangdong 518057 (CN); LI, Liping, Shenzhen, Guangdong 518057 (CN); CHEN, Yaquan, Shenzhen, Guangdong 518057 (CN); ZHANG, Lu, Shenzhen, Guangdong 518057 (CN)
(74) Representative: Deambrogi, Edgardo
(86) International application number: PCT/CN2024/073475
(87) International publication number: WO 2025/001096

(57) **Abstract**

Embodiments of the present invention provide a method for roaming communication, a communication network device, a system, and a storage medium, and belongs to the technical field of communications. The method comprises: in response to a terminal being in a roaming state, receiving, by a visited network exposure function (V-NEF), a capability invocation request initiated by a home application function (H-AF); determining whether the V-NEF is capable of processing the capability invocation request; if yes, performing, by the V-NEF, interactive communication with a home network element function to complete capability invocation, wherein the home network element function comprises at least one of a unified data management (UDM) function or a policy control function (PCF); and if no, performing, by a home NEF, interactive communication with the home network element function to complete the capability invocation.

## Description

### Cross-Reference to Related Application

The present invention is on the basis of and claims priority to Chinese Patent Application No. CN202310802645.6 filed on June 30, 2023 and entitled "ROAMING COMMUNICATION METHOD, COMMUNICATION NETWORK DEVICE, SYSTEM, AND STORAGE MEDIUM", the entire invention of which is incorporated herein by reference.

### Technical Field

The present invention relates to the field of communication technologies, and in particular, to a method for roaming communication, a communication network device, a system, and a storage medium.

### Background

Network exposure function (NEF) is an important part of a 5G network architecture, supporting the exposure of various functions of network elements in a 5G core network to application function AF (application function). The NEF mainly includes an event monitoring capability, a service provisioning capability, a policy/charging capability, an analysis reporting capability, etc., achieving a friendly interface between network capabilities and service requirements. However, after a terminal roams, since there is no interaction interface between the NEFs of a visited network and a home network, it is necessary to set up a centralized Intermediate-NEF (I-NEF) between the visited network and the home network. This correspondingly requires increased deployment of devices and additional interaction interfaces, which incur high costs.

Therefore, how to reduce the costs of invoking network capabilities when a terminal performs roaming communication has become an urgent problem to be solved.

### Summary

A main objective of embodiments of the present invention is to provide a roaming communication method, a communication network device, a system, and a storage medium, aiming to reduce the costs of invoking network capabilities when a terminal performs roaming communication.

In a first aspect, embodiments of the present invention provide a roaming communication method, including: in response to a terminal being in a roaming state, receiving, by a visited network exposure function (V-NEF), a capability invocation request initiated by a home application function (H-AF); determining whether the V-NEF is capable of processing the capability invocation request; if yes, performing, by the V-NEF, interactive communication with a home network element function to complete capability invocation, wherein the home network element function includes at least one of a unified data management (UDM) function or a policy control function (PCF); and if no, performing, by a home NEF, interactive communication with the home network element function to complete the capability invocation.

In a second aspect, embodiments of the present invention provide a communication network device, including: a processor, a memory, a computer program stored on the memory and executable by the processor, and a data bus configured to implement connection communication between the processor and the memory, wherein the computer program, when executed by the processor, causes the steps of the method for roaming communication hereinabove to be implemented.

In a third aspect, embodiments of the present invention provide a mobile network system, including a H-AF, a home NEF, a home network element function, and a V-NEF, wherein the home network element function includes at least one of a UDM or a PCF; the H-AF is configured to initiate a capability invocation request to the V-NEF; the V-NEF is configured to determine whether the V-NEF is capable of processing the capability invocation request; if yes, the V-NEF is configured to perform interactive communication with the home network element function to complete capability invocation; and if no, the home NEF is configured to perform interactive communication with the home network element function to complete the capability invocation.

In a fourth aspect, embodiments of the present invention provide a storage medium for computer-readable storage, wherein the storage medium stores one or more programs that are executable by one or more processors to implement the steps of the roaming communication method hereinabove.

### Brief Description of the Drawings

In order to illustrate technical solutions in the embodiments of the present invention more clearly, the drawings to be used in the description of the embodiments will be introduced briefly below. Apparently, the drawings in the following description show merely part of the embodiments of the present invention, and a person of ordinary skill in the art may still derive other drawings from these drawings without creative efforts.
FIG. 1 is a schematic diagram of an NEF framework;
FIG. 2 is a schematic diagram of a mobile network system according to embodiments of the present invention;
FIG. 3 is a schematic flowchart of a method for roaming communication according to embodiments of the present invention;
FIG. 4 is a schematic diagram of interaction of a mobile network system according to embodiments of the present invention;
FIG. 5 is a schematic diagram of a roaming communication process in which a visited NEF (V-NEF) is able to provide capability invocation according to embodiments of the present invention;
FIG. 6 is a schematic diagram of interaction of another mobile network system according to embodiments of the present invention;
FIG. 7 is a schematic diagram of a roaming communication process in which a visited NEF (V-NEF) is unable to provide capability invocation according to embodiments of the present invention; and
FIG. 8 is a schematic structural block diagram of a communication network device according to embodiments of the present invention.

### Detailed Description of the Embodiments

The technical solutions in the embodiments of the present invention will be clearly and completely described below with reference to the accompanying drawings in the embodiments of the present invention. It is apparent that the described embodiments are only part of the embodiments of the present invention rather than all of the embodiments. Based on the embodiments in the present invention, all other embodiments obtained by a person of ordinary skill in the art in the art without creative efforts shall fall within the protection scope of the present invention.

The flowcharts shown in the accompanying drawings are exemplary descriptions only and are not necessary to include all the content and operations/steps, nor have to be performed in the order described. For example, part of operations/steps may further be decomposed, combined or partially combined, so that an actual execution order may change according to an actual situation.

It should be understood that the terms used in the specification of the present invention are for the purpose of describing specific embodiments only and are not intended to limit the present invention. As used in the specification of the present invention and the appended claims, unless the context clearly indicates otherwise, the singular forms "a", "an", and "the" are intended to include plural forms.

NEF is an important part of a 5G network architecture, supporting the exposure of functions of network elements in a 5G core network to an AF, wherein the functions of the network elements in the 5G core network include, but are not limited to, a policy control function (PCF), a unified data management (UDM) function, a unified data repository function (UDR), an access and mobility management function (AMF ), a session management function (SMF), and the like.

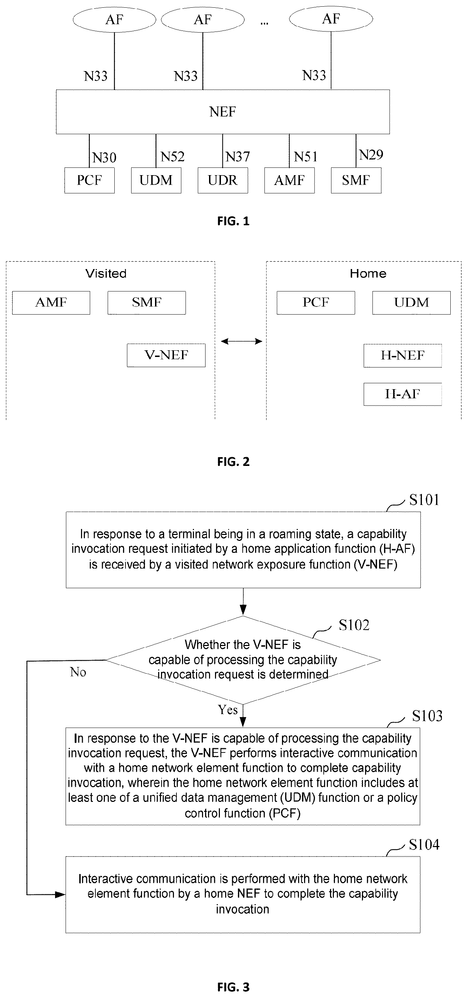

As shown in FIG. 1, the NEF is configured to implement interactive communication with the AF based on an application programming interface (API), e.g., implement interactive communication with each AF via each N33 interface. The NEF is configured to implement interactive communication with the PCF, the UDM, the UDR, the AMF, and the SMF via corresponding interfaces. For example, the NEF is configured to implement interactive communication with the PCF via an N30 interface; the NEF is configured to implement interactive communication with the UDM via an N52 interface; the NEF is configured to implement interactive communication with the UDR via an N37 interface; the NEF is configured to implement interactive communication with the AMF via an N51 interface; and the NEF is configured to implement interactive communication with the SMF via an N29 interface. AF refers to various services at the application layer, which may be applications within an operator or third-party applications, such as video servers and game servers. The applications within the operator, if falling within the same trusted domain as other applications, can directly interact with and access the other applications. However, part of the applications within the trusted domain may access other network element functions via the NEF, such as office applications like employee clock-in. The third-party applications are not within the trusted domain and must access other network element functions via the NEF to subscribe to services or user-related information.

The NEF supports the exposure of the network element functions such as the PCF, the UDM, the UDR, the AMF, and the SMF to the AF, which mainly includes an event monitoring capability, a service provisioning capability, a policy/charging capability, an analysis reporting capability, etc., achieving a friendly interface between network capabilities and service requirements.

The event monitoring capability enables the AF to subscribe to and obtain context information such as a status report of a terminal over network, such that the AF is able to perform corresponding operation based on the status of the terminal to improve the service quality or user experience of the AF. The event monitoring capability includes, but is not limited to, subscription and reporting of the following events: connection loss, terminal reachability, terminal location and location update, set-card separation, roaming state, communication failure, and number of terminals in an area.

The service provisioning capability enables a third-party application to provide expected terminal behaviors or service-specific information (including authorization information, external information received and supplied via the NEF, stored information, and the like) to each network element function in a 5G core network via the NEF.

The policy/charging capability allows for a requesting session and a charging policy, implementing a Quality of Service (QoS) policy, and applying a charging function, and may be configured to handle specific QoS of a terminal session and service priority processing, and set an appropriate charging rate for a charging party.

The analysis reporting capability allows for collecting third-party application data via the NEF, providing the data to a network data analytics function (NWDAF) for data analysis, and securely delivering analysis results to the third-party application via the NEF.

After a terminal roams, since there is no interaction interface between the NEFs of a visited network and a home network, it is necessary to set up a centralized I-NEF between the visited network and the home network. This correspondingly requires increased deployment of devices and additional interaction interfaces, which incur high costs.

To solve the problems hereinabove, the embodiments of the present invention provide a method for roaming communication, a communication network device, a system, and a storage medium, aiming to reduce the costs of invoking network capabilities when a terminal performs roaming communication.

Part of the embodiments of the present invention are described below with reference to the accompanying drawings. The embodiments described below and the features of the embodiments may be combined with one another under the circumstance that there is no conflict.

FIG. 2 is a schematic diagram of a mobile network system according to embodiments of the present invention. As shown in FIG. 2, the mobile network system includes a H-AF (H-AF), a home NEF (H-NEF), a home network element function, a visited NEF (V-NEF), and a visited network element function, wherein the home network element function includes, but is not limited to, UDM and PCF, and the visited network element function includes, but is not limited to, AMF and SMF.

After a terminal roams, the H-AF initiates a capability invocation request to the V-NEF, such as requests for event subscription and notification, network parameter activation/configuration, and application for network-side adjustment of QoS control policies. The V-NEF determines whether the V-NEF is capable of processing the capability invocation request, i.e., determines whether the V-NEF is capable of providing the capability invocation corresponding to the request.

A scenario corresponding to the determination result is that the V-NEF determines that the capability invocation is providable, and then the V-NEF performs interactive communication with the home network element function such as home UDM or PCF to complete capability invocation and perform related operation processing, including, but not limited to:
Monitoring and notification of subscription events, including related information such as addresses of event notifications and event reports;
Monitoring of user dynamic information such as terminal mobility information, accessed service information, and user service experience information, as well as load information of network element functions in the network, and wireless network load information (e.g., cell congestion information);
Conversion of a communication parameter configuration request message from the AF into an API interface message for sending to corresponding network element functions such as the UDM, the AMF, and the SMF, wherein communication parameters include, but are not limited to, a periodic communication flag, a communication cycle duration, a communication cycle interval duration, a specified communication time, a terminal type flag, a battery type flag, a data transmission type, and the like; and if there is a group of terminals, the NEF is split to allow a single terminal to separately initiate operation processing related to process execution; and
Sending to the PCF a request message carrying information such as a terminal identifier, a bandwidth, a priority, and a QoS event monitoring indication, to apply for network-side adjustment of QoS control policies and dynamically adjust user policies, etc.

Another scenario corresponding to the determination result is that the V-NEF determines that the capability invocation is not providable, the V-NEF feeds back to the H-AF response failure information for the capability invocation request, the H-AF initiates the capability invocation request to the H-NEF, and the H-NEF performs interactive communication with the home network element function such as home UDM or PCF to complete capability invocation and perform related operation processing, including, but not limited to:
Monitoring and notification of subscription events, including related information such as addresses of event notifications and event reports;
Monitoring of user dynamic information such as terminal mobility information, accessed service information, and user service experience information, as well as load information of network element functions in the network, and wireless network load information (e.g., cell congestion information);
Conversion of a communication parameter configuration request message from the AF into an API interface message for sending to corresponding network element functions such as UDM, AMF, and SMF, Communication parameters include, but are not limited to, a periodic communication flag, a communication cycle duration, a communication cycle interval duration, a specified communication time, a terminal type flag, a battery type flag, a data transmission type, and the like. If there is a group of terminals, the NEF is split to allow a single terminal to separately initiate operation processing related to process execution.

Sending to the PCF a request message carrying information such as a terminal identifier, a bandwidth, a priority, and a QoS event monitoring indication, to apply for network-side adjustment of QoS control policies and dynamically adjust user policies, etc.

In a case where there is no interface between the V-NEF and the H-NEF, a flexible visited network architecture is provided on the basis of the mobile network system hereinabove. It is applicable not only to application scenarios where capability invocation requests are initiated by internal applications of an operator in the trusted domain when a terminal roams, but also to application scenarios where capability invocation requests are initiated by third-party applications within or outside the trusted domain. For the capability invocation requests initiated by the third-party applications outside the trusted domain, other network element functions must be accessed via the NEF to subscribe to services or user-related information.

It will be appreciated that the mobile network system hereinabove is applicable not only to a 5G core network but also to 4G and other future mobile communication networks.

The following will introduce in detail the method for roaming communication according to the embodiments of the present invention on the basis of the mobile network system. It needs to be noted that the mobile network system in FIG. 2 is only configured to explain the method for roaming communication according to the embodiments of the present invention, but does not constitute a limitation on the application scenarios of the method for roaming communication according to the embodiments of the present invention.

FIG. 3 is a schematic flowchart of a roaming communication method according to embodiments of the present invention. The roaming communication method is applicable to a mobile network system and is employed to reduce the costs of invoking network capabilities when a terminal performs roaming communication.

As shown in FIG. 3, the roaming communication method includes steps S101 to S104.

At step S101, in response to a terminal being in a roaming state, a capability invocation request initiated by a home application function (H-AF) is received by a visited network exposure function (V-NEF).

After the terminal roams, the H-AF initiates the capability invocation request to the V-NEF. As an example, the capability invocation request carries AF identification information, access authentication information, capability invocation information, and the like. The access authentication information includes, but is not limited to, a token, a key, etc., and the capability invocation information includes, but is not limited to, an event ID, a network parameter, collectable data, a computing load, a network bandwidth, network service quality, etc. After the H-AF initiates the capability invocation request to the V-NEF, the V-NEF receives the capability invocation request initiated by the H-AF.

As an example, before the H-AF initiates the capability invocation request to the V-NEF, an interactive message is sent to the H-AF by a user plane function (UPF), wherein the message includes encrypted terminal information such as an encrypted terminal identifier, terminal location information and/or a country code. For example, the encrypted terminal information such as the encrypted terminal identifier, the terminal location information and/or the country code is carried in a message header. The H-AF parses the message to obtain the encrypted terminal information, and decrypts the encrypted terminal information to obtain the terminal information such as the terminal identifier, the terminal location information and/or the country code. The H-AF determines, according to the obtained terminal information, e.g., the terminal identifier, the terminal location information and/or the country code, the V-NEF that provides services to a user. Subsequently, the H-AF initiates the capability invocation request to the V-NEF, and the V-NEF receives the capability invocation request initiated by the H-AF.

At step S102, whether the V-NEF is capable of processing the capability invocation request is determined; if yes, step S103 is performed; and if no, step S104 is performed.

At step S103, in response to the V-NEF is capable of processing the capability invocation request, the V-NEF performs interactive communication with a home network element function to complete capability invocation, wherein the home network element function includes at least one of a unified data management (UDM) function or a policy control function (PCF).

At step S104, interactive communication is performed with the home network element function by a home NEF to complete the capability invocation.

After receiving the capability invocation request initiated by H-AF, the V-NEF needs to determine whether it is able to process the capability invocation request, that is, to determine whether it is able to provide the capability invocation corresponding to the request.

In some embodiments, determining whether the V-NEF is capable of processing the capability invocation request includes:
obtaining verification information, wherein the verification information includes at least one of AF identification information, access authentication information, or capability invocation information; the access authentication information includes a token or a key; and the capability invocation information includes at least one of a network parameter, a computing load, a network bandwidth, and network service quality;
verifying the verification information; and
in response to the verification being passed, determining that the V-NEF is capable of processing the capability invocation request.

As an example, the V-NEF parses the received capability invocation request initiated by the H-AF to obtain corresponding verification information, wherein the verification information includes, but is not limited to, AF identification information, access authentication information, capability invocation information, and the like. The access authentication information includes a token or a key, and the capability invocation information includes, but is not limited to, an event ID, a network parameter, collectable data, a computing load, a network bandwidth, network service quality, etc.

The V-NEF verifies the verification information such as the AF identification information, the access authentication information, and the capability invocation information, wherein if the verification is passed, it is determined that the V-NEF is capable of processing the capability invocation request, that is, the capability invocation corresponding to the request is providable. On the contrary, if the verification fails, it is determined that the V-NEF is not capable of processing the capability invocation request, that is, the capability invocation corresponding to the request is not providable.

In some embodiments, verifying the verification information includes:
verifying whether the AF identification information is valid;
verifying whether the access authentication information is correct; and
verifying whether a corresponding invoked capability in the capability invocation information is within a subscription list of the terminal and whether a subscription invocation policy is satisfied.

As an example, the V-NEF verifies whether the AF identification information is valid, verifies whether the token or the key is correct, and verifies whether a corresponding invoked capability in the capability invocation information is within a subscription list of the terminal and whether a subscription invocation policy is satisfied. If the AF identification information is valid, the token or the key is correct, and the corresponding invoked capability in the capability invocation information is within the subscription list of the terminal and the subscription invocation policy is satisfied, it is determined that the verification is passed, and the V-NEF is capable of processing the capability invocation request, that is, the capability invocation corresponding to the request is providable. Otherwise, if the verification of the AF identification information is invalid, or the token or the key is incorrect, or the corresponding invoked capability in the capability invocation information is not within the subscription list of the terminal, or the subscription invocation policy is not satisfied, it is determined that the verification fails, the V-NEF is not capable of processing the capability invocation request, that is, the capability invocation corresponding to the request is not providable.

A scenario is that the V-NEF determines that the capability invocation is providable, and then the V-NEF performs interactive communication with the home network element function such as home UDM or PCF to complete capability invocation and perform related operation processing, including, but not limited to:
Monitoring and notification of subscription events, including related information such as addresses of event notifications and event reports;
Monitoring user dynamic information such as terminal mobility information, accessed service information, and user service experience information, as well as load information of network element functions in the network, and wireless network load information (e.g., cell congestion information);
Converting a communication parameter configuration request message of the AF into an API interface message, and sending to corresponding network element functions such as UDM, AMF, and SMF. The communication parameters include, but are not limited to, a periodic communication flag, a communication cycle duration, a communication cycle interval duration, a specified communication time, a terminal type flag, a battery type flag, a data transmission type, and the like. If there is a group of terminals, the NEF is split to allow a single terminal to separately initiate operation processing related to process execution.

Sending to the PCF a request message carrying information such as a terminal identifier, a bandwidth, a priority, and a QoS event monitoring indication, to apply for network-side adjustment of QoS control policies and dynamically adjust user policies, etc.

In some embodiments, performing, by the V-NEF, interactive communication with the home network element function to complete the capability invocation includes:
sending a capability invocation instruction to the home UDM and/or PCF, such that the home UDM and/or PCF performs interactive communication with a visited network element function, and the visited network element function executes the capability invocation, wherein the visited network element function includes at least one of an access and mobility management function (AMF) or a session management function (SMF); and
receiving a capability execution result notification reported by the visited network element function.

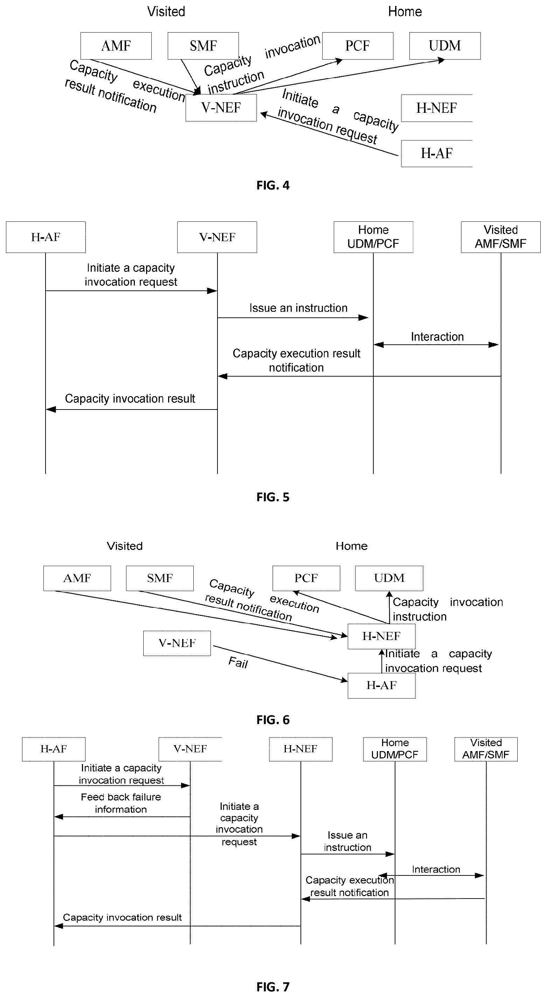

If the V-NEF determines that the capability invocation is providable, the V-NEF sends the capability invocation instruction to the home UDM and/or PCF. For example, it is as shown in FIG. 4. After the home UDM and/or PCF receives the capability invocation instruction, the home UDM and/or PCF performs interactive communication with the visited AMF and/or SMF, and the visited AMF and/or SMF executes the capability invocation.

The visited AMF and/or SMF reports the capability execution result notification to the V-NEF, and the V-NEF receives the capability execution result notification reported by the visited AMF and/or SMF. The capability execution result notification includes, but is not limited to, event monitoring capability, report event notification, etc.

As an example, after receiving the capability execution result reported by the visited network element function, the method includes:
generating a capability invocation result; and
pushing the capability invocation result to the H-AF.

After receiving the capability execution result notification, the V-NEF analyzes and processes the capability execution result notification, and on the basis of the network configuration, when a service-related determination condition is satisfied, generates the capability invocation result and pushes the capability invocation result to the H-AF.

For example, as shown in FIG. 5, a roaming communication process in which the V-NEF may provide capability invocation is as follows.

At step 1, the H-AF finds the V-NEF according to the terminal identifier, the terminal location information and/or the country code, and the H-AF initiates to the V-NEF the capability invocation request including the AF identifier, the access authentication information (a token or a key, etc.), and the capability invocation information.

At step 2, the V-NEF determines whether it is able to provide the corresponding capability invocation. The NEF verifies the AF identifier, the access authentication information, the capability invocation information, and the like, verifies whether the AF identifier is valid, whether the token or the key is correct, whether the invoked capability is within the subscription list of the terminal, whether the subscribed invocation policy is satisfied, etc., and comprehensively determines whether the V-NEF is capable of processing the corresponding capability invocation request.

At step 3, if it is determined that the V-NEF is capable of processing the corresponding capability invocation request, the V-NEF sends the capability invocation instruction to the home UDM and/or PCF. For example, a monitoring request for a subscription event is initiated and a notification is obtained, and/or a network parameter configuration request message from the AF is converted into a home UDM interface message for configuration update, and/or a request message carrying a terminal identifier, a bandwidth, a priority, a QoS event monitoring indication, and the like is sent to the home PCF to apply for network-side adjustment of QoS control policies and dynamically adjust user policies, etc.

At step 4, the home UDM and/or PCF performs information interaction with the visited AMF and/or SMF.

At step 5, the visited AMF and/or SMF performs the capability invocation. The visited AMF and/or SMF reports the capability execution result notification to the V-NEF, such as the event monitoring capability and the report event notification.

At step 6, the V-NEF analyzes and processes the capability execution result notification, generates the capability invocation result, and pushes the capability invocation result to the H-AF.

Another scenario is that the V-NEF determines that the capability invocation is not providable, the V-NEF feeds back to the H-AF response failure information for the capability invocation request, the H-AF initiates the capability invocation request to the H-NEF, and the H-NEF performs interactive communication with the home network element function such as home UDM or PCF to complete capability invocation and perform related operation processing, including, but not limited to:
Monitoring and notification of subscription events, including related information such as addresses of event notifications and event reports;
Monitoring user dynamic information such as terminal mobility information, accessed service information, and user service experience information, as well as load information of network element functions in the network, and wireless network load information (e.g., cell congestion information);
Converting of a communication parameter configuration request message of the AF into an API interface message, and sending to corresponding network element functions such as UDM, AMF, and SMF. The communication parameters include, but are not limited to, a periodic communication flag, a communication cycle duration, a communication cycle interval duration, a specified communication time, a terminal type flag, a battery type flag, a data transmission type, and the like. If there is a group of terminals, the NEF is split to allow a single terminal to separately initiate operation processing related to process execution.

Sending to the PCF a request message carrying information such as a terminal identifier, a bandwidth, a priority, and a QoS event monitoring indication, to apply for network-side adjustment of QoS control policies and dynamically adjust user policies, etc.

In some embodiments, performing, by the home NEF, interactive communication with the home network element function to complete the capability invocation includes:
sending response failure information for the capability invocation request to the H-AF, such that the H-AF initiates the capability invocation request to the home NEF upon receiving the response failure information; the home NEF sends the capability invocation instruction to the home UDM and/or PCF; the home UDM and/or PCF perform interactive communication with the visited network element function; and the visited network element function executes the capability invocation, and reports the capability execution result notification to the home NEF.

If the V-NEF determines that the capability invocation is not providable, the V-NEF sends the response failure information for the capability invocation request to the H-AF. Upon receiving the failure information, the H-AF initiates the capability invocation request to the H-NEF, and the H-NEF sends the capability invocation instruction to the home UDM and/or PCF. For example, it is as shown in FIG. 6. After the home UDM and/or PCF receives the capability invocation instruction, the home UDM and/or PCF performs interactive communication with the visited AMF and/or SMF, and the visited AMF and/or SMF executes the capability invocation.

The visited AMF and/or SMF reports the capability execution result notification to the H-NEF, and the H-NEF receives the capability execution result notification reported by the visited AMF and/or SMF. The capability execution result notification includes, but is not limited to, event monitoring capability, report event notification, etc.

After receiving the capability execution result notification, the H-NEF analyzes and processes the capability execution result notification, and on the basis of the network configuration, when a service-related determination condition is satisfied, generates the capability invocation result and pushes the capability invocation result to the H-AF.

For example, as shown in FIG. 7, a roaming communication process in which the V-NEF cannot provide capability invocation is as follows.

At step 1, the H-AF finds the V-NEF according to the terminal identifier, the terminal location information and/or the country code, and the H-AF initiates to the V-NEF the capability invocation request including the AF identifier, the access authentication information (a token or a key, etc.), and the capability invocation information.

At step 2, the V-NEF determines whether it is able to provide the corresponding capability invocation. The NEF verifies the AF identifier, the access authentication information, the capability invocation information, and the like, verifies whether the AF identifier is valid, whether the token or the key is correct, whether the invoked capability is within the subscription list of the terminal, whether the subscribed invocation policy is satisfied, etc., and comprehensively determines whether the V-NEF is capable of processing the corresponding capability invocation request.

At step 3, if it is determined that the V-NEF is not capable of processing the corresponding capability invocation request, the V-NEF feeds back H-AF failure information.

At step 4, the H-AF initiates the capability invocation request to the H-NEF.

Step 5, the H-NEF sends the capability invocation instruction to the home UDM and/or PCF, for example, initiates a monitoring request for a subscription event and obtains a notification, and/or converts a network parameter configuration request message from the AF into a home UDM interface message for configuration update, and/or sends a request message carrying a terminal identifier, a bandwidth, a priority, a QoS event monitoring indication, and the like to the home PCF to apply for network-side adjustment of QoS control policies and dynamically adjust user policies, etc.

At step 6, the home UDM and/or PCF performs information interaction with the visited AMF and/or SMF.

At step 7, the visited AMF and/or SMF performs the capability invocation. The visited AMF and/or SMF reports the capability execution result notification to the H-NEF, such as the event monitoring capability and the report event notification.

At step 8, the H-NEF analyzes and processes the capability execution result notification, generates the capability invocation result, and pushes the capability invocation result to the H-AF.

By the roaming method hereinabove, it is unnecessary to deploy the I-NEF between the visited network and the home network, and accordingly, there is no need to add deployed devices and additional interaction interfaces, thereby reducing costs. In contrast to being only suitable for the internal applications of the operator within the trusted domain, the present invention also applies to application scenarios where third-party applications initiate network capability exposure requests when a terminal is roaming, thereby enhancing deployment flexibility.

In the embodiment hereinabove, when the terminal is in the roaming state, the H-AF initiates the capability invocation request to the V-NEF, and the V-NEF determines whether the V-NEF is capable of processing the capability invocation request. If yes, the V-NEF performs interactive communication with the home network element function to complete the capability invocation, wherein the home network element function includes at least one of the UDM or the PCF. If no, the home NEF performs interactive communication with the home network element function to complete the capability invocation, thereby achieving network capability invocation in case of no interface interconnection between the V-NEF and the home NEF. Therefore, the costs of invoking network capabilities are reduced.

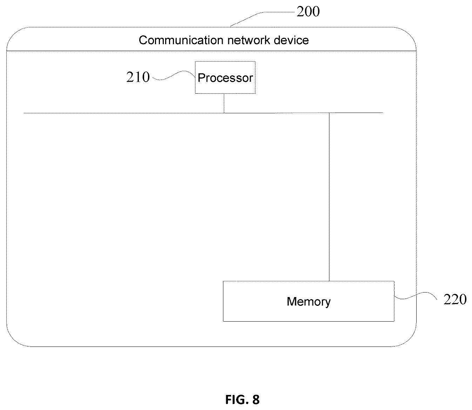

Embodiments of the present invention further provide a communication network device. FIG. 8 is a schematic block diagram of a communication network device according to an embodiment of the present invention.

As shown in FIG. 8, the communication network device 200 may include a processor 210 and a memory 220, wherein the processor 210 is connected to the memory 220 via a bus, and the bus is, for example, an inter-integrated circuit (I2C) bus.

In particular, the processor 210 may be a micro-controller unit (MCU), a central processing unit (CPU), a digital signal processor (DSP), or the like.

In particular, the memory 220 may be a Flash chip, a read-only memory (ROM) disk, an optical disk, a USB flash disk, a mobile hard disk, or the like. The memory 220 has stored herein various computer programs for the processor 210 to execute.

The processor 210 is configured to run the computer programs stored in the memory and implement the following steps when executing the computer programs:
in response to a terminal being in a roaming state, receiving, by a visited network exposure function (NEF), a capability invocation request initiated by a home application function (AF);
determining whether the V-NEF is capable of processing the capability invocation request;
in response to the V-NEF is capable of processing the capability invocation reques, performing, by the V-NEF, interactive communication with a home network element function to complete capability invocation, wherein the home network element function includes at least one of a unified data management (UDM) function or a policy control function (PCF); and
in response to the V-NEF is not capable of processing the capability invocation request, performing, by a home NEF, interactive communication with the home network element function to complete the capability invocation.

In some embodiments, when performing, by the V-NEF, interactive communication with the home network element function to complete the capability invocation, the processor 210 is configured to:
send a capability invocation instruction to the home UDM and/or PCF, such that the home UDM and/or PCF performs interactive communication with a visited network element function, and the visited network element function executes the capability invocation, wherein the visited network element function includes at least one of an access and mobility management function (AMF) or a session management function (SMF); and
receive a capability execution result notification reported by the visited network element function.

In some embodiments, after receiving the capability execution result reported by the visited network element function, the processor 210 is configured to:
generate a capability invocation result; and
push the capability invocation result to the H-AF.

In some embodiments, when performing, by the home NEF, interactive communication with the home network element function to complete the capability invocation, the processor 210 is configured to:
send response failure information for the capability invocation request to the H-AF, such that the H-AF initiates the capability invocation request to the home NEF upon receiving the response failure information; the home NEF sends the capability invocation instruction to the home UDM and/or PCF; the home UDM and/or PCF performs interactive communication with the visited network element function; and, the visited network element function executes the capability invocation, and reports the capability execution result notification to the home NEF.

In some embodiments, the V-NEF is determined by the H-AF according to terminal information, wherein the terminal information includes a terminal identifier, terminal location information and/or a country code; and the H-AF is configured to, upon receiving a user plane function (UPF) message, decrypt encrypted terminal information carried in the UPF message to obtain the terminal information.

In some embodiments, when determining whether the V-NEF is capable of processing the capability invocation request, the processor 210 is configured to:
obtain verification information, wherein the verification information includes at least one of AF identification information, access authentication information, or capability invocation information; the access authentication information includes a token or a key; and the capability invocation information includes at least one of a network parameter, a computing load, a network bandwidth, and network service quality;
verify the verification information; and
in response to the verification being passed, determine that the V-NEF is capable of processing the capability invocation request.

In some embodiments, when verifying the verification information, the processor 210 is configured to:
verify whether the AF identification information is valid;
verify whether the access authentication information is correct; and
verifying whether a corresponding invoked capability in the capability invocation information is within a subscription list of the terminal and whether a subscription invocation policy is satisfied.

Embodiments of the present invention further provide a storage medium for computer-readable storage, wherein the storage medium has one or more programs stored herein that are executable by one or more processors to implement the steps of any method for roaming communication provided in the embodiments of the present invention.

The storage medium may be an internal storage unit of the communication network device described in the embodiments hereinabove, for example, a hard disk or an internal memory of the communication network device. The storage medium may alternatively be an external storage device of the communication network device, such as a plug-in hard disk equipped on the communication network device, a smart media card (SMC), a secure digital (SD) card, a flash card, etc.

A person of ordinary skill in the art can understand that all or part of the steps in the method and functional modules/units in the system and the device disclosed above can be implemented as software, firmware, hardware, and appropriate combinations thereof. In a hardware embodiment, the partition of functional modules/units mentioned in the description hereinabove does not necessarily correspond to the partition of physical components. For example, a physical component may have a plurality of functions, or a function or step may be executed cooperatively by a plurality of physical components. Part or all of the components may be implemented as software executed by a processor, such as a central processing unit, a digital signal processor, or a microprocessor, or as hardware, or as an integrated circuit, such as an application specific integrated circuit. Such software may be distributed on a computer-readable medium. The computer-readable medium may include a computer storage medium (or a non-transitory medium) and a communication medium (or a transitory medium). As is well known to a person of ordinary skill in the art, the term "computer storage medium" includes volatile and nonvolatile, and removable and non-removable media implemented in any method or technique for storing information (such as computer-readable instructions, data structures, program modules, or other data). The computer storage media include but are not limited to RAM, ROM, EEPROM, flash memory or other memory techniques, CD-ROM, digital video disk (DVD) or other optical disk storage, cassette, tape, magnetic disk storage or other magnetic storage devices, or any other medium that can be configured to store desired information and that can be accessed by a computer. Furthermore, as is well known to a person of ordinary skill in the art, the communication media usually contain computer-readable instructions, data structures, program modules, or other data in modulated data signals such as carrier waves or other transmission mechanisms, and may include any information transfer medium.

It should also be understood that the term "and/or" used in this specification of the present invention and the appended claims refers to any or all possible combinations of one or more of associated items that are listed, and include these combinations. It is to be noted that, in the present invention, terms "include", "including" or any other variants are intended to encompass non-exclusive inclusion, such that a process, a method, an article, or a system including a series of elements not only include those elements, but also includes other elements not listed explicitly or includes intrinsic elements for the process, the method, the article, or the system. Without further limitations, an element defined by the phrase "including a ..." does not exclude the presence of an additional identical element in the process, method, article, or system including the element.

The sequence numbers of the embodiments of the present invention hereinabove are merely for description and do not represent the superiority or inferiority of the embodiments. The above descriptions are merely specific embodiments of the present invention, but the protection scope of the present invention is not limited thereto. Any person skilled in the art can easily conceive of various equivalent modifications or replacements within the technical scope disclosed by the present invention, and these modifications or replacements shall fall within the protection scope of the present invention. Therefore, the protection scope of the present invention shall be subject to the protection scope of the claims.

## Claims

1. A roaming communication method, comprising:
in response to a terminal being in a roaming state, receiving, by a visited network exposure function ,V-NEF, a capability invocation request initiated by a home application function ,H-AF;
determining whether the V-NEF is capable of processing the capability invocation request;
in response to the V-NEF is capable of processing the capability invocation request, performing, by the V-NEF, interactive communication with a home network element function to complete capability invocation, wherein the home network element function comprises at least one of a unified data management ,UDM, function or a policy control function ,PCF; and
in response to the V-NEF is incapable of processing the capability invocation request, performing, by a home visited network exposure function ,H-NEF, interactive communication with the home network element function to complete the capability invocation.

2. The method according to claim 1, wherein the performing, by the V-NEF, interactive communication with a home network element function to complete capability invocation comprises:
sending a capability invocation instruction to a home UDM and/or PCF, such that the home UDM and/or PCF performs interactive communication with a visited network element function, and the visited network element function executes the capability invocation, wherein the visited network element function comprises at least one of an access and mobility management function ,AMF, or a session management function ,SMF; and
receiving a capability execution result notification reported by the visited network element function.

3. The method according to claim 2, after receiving the capability execution result notification reported by the visited network element function, comprising:
generating a capability invocation result; and
pushing the capability invocation result to the H-AF.

4. The method according to claim 1, wherein the performing, by a home NEF, interactive communication with the home network element function to complete the capability invocation comprises:
sending response failure information for the capability invocation request to the H-AF, such that the H-AF initiates the capability invocation request to the home NEF upon receiving the response failure information; the home NEF sends the capability invocation instruction to a home UDM and/or PCF; the home UDM and/or PCF performs interactive communication with the visited network element function; and the visited network element function executes the capability invocation, and reports the capability execution result notification to the home NEF.

5. The method according to claim 1, wherein the V-NEF is determined by the H-AF according to terminal information, wherein the terminal information comprises a terminal identifier, terminal location information and/or a country code; and the H-AF is configured to, upon receiving a user plane function ,UPF, message, decrypt encrypted terminal information carried in the UPF message to obtain the terminal information.

6. The method according to any one of claims 1 to 5, wherein the determining whether the V-NEF is capable of processing the capability invocation request comprises:
obtaining verification information, wherein the verification information comprises at least one of AF identification information, access authentication information, or capability invocation information; the access authentication information comprises a token or a key; and the capability invocation information comprises at least one of a network parameter, a computing load, a network bandwidth, and network service quality;
verifying the verification information; and
in response to the verification being passed, determining that the V-NEF is capable of processing the capability invocation request.

7. The method according to claim 6, wherein the verifying the verification information comprises:
verifying whether the AF identification information is valid;
verifying whether the access authentication information is correct; and
verifying whether a corresponding invoked capability in the capability invocation information is within a subscription list of the terminal and whether a subscription invocation policy is satisfied.

8. A communication network device, comprising:
a processor, a memory, a computer program stored on the memory and executable by the processor, and a data bus configured to implement connection communication between the processor and the memory, wherein the processor is configured to execute the computer program to perform steps of the roaming communication method as claimed in any one of claims 1 to 7.

9. A mobile network system, comprising: a home application function ,H-AF, a home network exposure function ,H-NEF, a home network element function, and a visited network exposure function ,V-NEF, wherein the home network element function comprises at least one of a unified data management ,UDM, or a policy control function ,PCF; the H-AF is configured to initiate a capability invocation request to the V-NEF; the V-NEF is configured to determine whether the V-NEF is capable of processing the capability invocation request; in response to the V-NEF is capable of processing the capability invocation request, the V-NEF is configured to perform interactive communication with the home network element function to complete capability invocation; and in response to the V-NEF is not capable of processing the capability invocation request, the home NEF is configured to perform interactive communication with the home network element function to complete the capability invocation.

10. A storage medium for computer-readable storage, wherein the storage medium stores one or more programs, and the one or more programs are configured to cause, when executed by a processor, the processor to perform steps of the roaming communication method as claimed in any one of claims 1 to 7.
